# EUROPÄISCHE PATENTSCHRIFT

(11) **EP 1 151 819 B1**
(45) Veröffentlichungstag und Bekanntmachung des Hinweises auf die Patenterteilung: **02.03.2005**
(21) Anmeldenummer: 01110750.5
(22) Anmeldetag: 03.05.2001
(51) Int. Cl.: B23D 25/12, B23D 33/00

(54) **Antriebskupplung für Trommelscheren**
Drivecoupling for shears with rotating drums
Embrayage pour cisaille volante

(30) Priorität: 06.05.2000 DE 10022166
(43) Veröffentlichungstag der Anmeldung: 07.11.2001
(73) Patentinhaber: SMS Demag AG, 40237 Düsseldorf (DE)
(72) Erfinder: Grafe, Horst, 57271 Hilchenbach (DE); Ehls, Bernhard, 57271 Hilchenbach (DE)
(74) Vertreter: Valentin, Ekkehard, Dipl.-Ing.

(56) Entgegenhaltungen:
- US-A- 4 162 642

## Beschreibung

Die Erfindung betrifft eine Antriebskupplung für Trommelscheren zum Quertrennen eines laufenden Bandes insbesondere eines gewalzten Warmbandes, umfassend ein Paar in einem Scherengerüst gelagerte, durch ein Zahnradpaar in gegenläufigsynchrone Rotation antreibbare Messertrommeln sowie ein zugeordnetes Antriebsaggregat. (Siehe z.B. US-A- 4 162 642).

Derartige Antriebskupplungen sind beim Stand der Technik in vielfachen Ausführungen bekannt, wobei jedoch überwiegend von einem Paar in einem Scherengerüst gelagerten, durch ein Zahnradpaar in gegenläufig-synchrone Rotation antreibbaren Messertrommeln jeweils nur eine der Trommeln als Antriebstrommel ausgebildet und über eine Antriebskupplung mit dem Antriebsaggregat verbunden ist.

Die DE-Offenlegungsschrift 26 22 558 beschreibt eine Schere zum Schneiden von sich bewegenden Bändern mit zwei in Scherenständern gelagerten, sich gegenläufig drehenden Messertrommeln, wobei die im Abstand auf einer Sohlplatte angeordneten Scherenständer oberhalb der Messertrommeln durch ein lösbares Joch miteinander verbunden sind und beide Messertrommeln direkt in den Scherenständern, die jeweils aus einem Stück bestehen, gelagert sind, und wobei die Scherenständer in die Sohlplatte eingesetzt und mit dieser durch schnell lösbare Halterungen verbunden sind.

Die Messertrommel ist durch eine leicht ausrückbare Kupplung mit einem Antrieb verbunden. Die ausrückbare Kupplung kann mit einer hydraulisch verschiebbaren Kupplungshülse versehen sein. Bei dieser Bauart erfolgt der Antrieb der Schere über die untere Messerwelle. Demzufolge übernimmt die Antriebskupplung das Drehmoment sowohl für die untere, als auch für die obere Messertrommel.

Das US-Patent 4,459,887 offenbart einen Antrieb in einer Trommelschere vom Rotortyp, wobei dieser ein mehrstufiges Getriebe mit einem Elektromotor vorgeordnet ist, dessen Abtriebswelle über ein spezielles Kraftübertragungselement verbunden ist, welches Mittel zum Einstellen einer vorwählbaren Länge eines Walzproduktes besitzt. Auch bei dieser Ausführung wird von zwei miteinander zusammenwirkenden Scherentrommeln nur eine direkt angetrieben und übernimmt ihrerseits den Synchronantrieb der zweiten Messertrommel.

Das Dokument GB 2 249 047 A offenbart eine Schere zum Trennen eines Metallbandes, das sich entlang einer Transportstrecke bewegt. Die Vorrichtung umfaßt zwei parallel gegenüberliegende horizontale Trommeln, die quer zum Transportweg und an entgegengesetzten Seiten von diesem angeordnet sind. Jede Trommel ist mit einem Schneidmesser bestückt und besitzt einen Schaft an beiden Seiten. Die Schäfte jeder Trommel sind in Einbaustücken gelagert und gegen die andere Trommel beweglich ausgebildet. Mit jedem beweglichen Einbaustück ist ein Hydraulikzylinder verbunden und derart angeordnet, daß er in der Lage ist, die damit verbundene Trommel zwischen einer ersten Position, in welcher die beiden Trommeln relativ voneinander entfernt sind, und in einer zweiten Position, in welcher sie zum Schneiden relativ nahe beieinander stehen, zu bewegen. Getrieberäder kämmen miteinander, wenn sich die beiden Trommeln in der zweiten Schnittposition befinden. Die Getrieberäder synchronisieren die beiden Trommeln. Ein Geschwindigkeitssensor produziert ein Signal, wenn die beiden Geschwindigkeiten eine vorbestimmte Größe erreichen, und veranlassen die Bewegung der Trommel in die zweite Position. Weil hierbei in der ersten Position die Synchronzahnräder nicht miteinander kämmen, sind über ein seitlich angeordnetes Synchrongetriebe die Schäfte beider Trommeln separat angetrieben.

Das Dokument WO 99 36 218 offenbart eine fliegende Trommelschere zum Schneiden dünner Metallstreifen, umfassend ein Gerüst, in dem zwei Trommeln mit horizontal abgeschrägten Messern gelagert und mit Getrieberädern gekuppelt sind. Zwischen den Rädern sowie den Lagern der Trommeln wird das Flankenspiel durch vorgespannte Federn eliminiert. Die Seitenteile des Scherengerüstes sind horizontal beabstandet, und zwar in Übereinstimmung mit der Breite des zu schneidenden Bandes und bilden zwei Lagergehäuse, die mit Ankern und horizontalen Schrauben über einen Unterlegring miteinander verbunden sind. Der Antrieb der Schere ist mit einer spielfreien Kupplung mit einer der Trommeln verbunden.

Ausgehend vom vorgenannten Stand der Technik liegt der Erfindung die Aufgabe zugrunde, eine Ausbildung und Anordnung der Antriebskupplung für Trommelscheren anzugeben, die eine erheblich günstigere Drehmomentverteilung- und -einleitung ermöglicht, und damit den Trommelzapfen der Antriebstrommel vom hohen Drehmoment für beide Trommeln entlastet. Weiterhin sollen die Abmessungen der Schere, quer zur Walzrichtung des Bandes, und damit Einbauprobleme reduziert werden, insbesondere beim Einbau in bestehende Anlagen; und schließlich sollen dadurch auch die Herstell- und Montagekosten der Schere deutlich verringert werden.

Zur Lösung der Aufgabe wird bei einer Antriebskupplung der im Oberbegriff von Anspruch 1 genannten Art mit der Erfindung vorgeschlagen, daß die Kupplung ein Kraftübertragungsmoment in Form eines hülsenförmigen Doppelverzahnungsteil besitzt, dessen eines Ende mit Paßsitz auf dem Wellenzapfen einer der Messertrommeln mit Verdrehsicherung aufgeschoben ist, und mit einer Außenverzahnung als Antriebszahnrad des Synchrongetriebes ausgebildet ist, und dessen anderes Ende einen außenverzahnten Flansch zum drehschlüssigen Eingriff in eine mit Innenverzahnung kompatibel ausgebildete, antriebsseitige Kupplungshülse besitzt.

Nach der Lehre der Erfindung sind bei der neuen Ausführung der scherenseitige Kupplungstreffer und Kammwalze einteilig oder mittels Flanschverbindung miteinander verbunden, wodurch eine äußerst günstige Drehmomentverteitung unter Entlastung des Lagerzapfens der Antriebstrommel erreicht wird. Das Drehmoment für die mitlaufende Messertrommel wird nicht über den Lagerzapfen der Antriebstrommel übertragen, sondern über das Kraftübertragungselement in Form des hülsenförmigen Doppelverzahnungsteils außerhalb des Lagerzapfens auf die zweite Trommel übertragen. Der Trommelzapfen, bisher als "bottle neck" für die Drehmomentdurchleitung wirkend, wird nunmehr um etwa 50 % des Drehmoments entlastet. Eine mögliche Bruchgefahr, insbesondere beim Stoßbetrieb einer Trommelschere wird, wirkungsvoll reduziert.

Gleichzeitig werden die Abmessungen der Schere, quer zur Walzrichtung, deutlich reduziert. Daraus ergeben sich Vorteile bei der Einplanung in bestehende Anlagen und die Kosten für Fertigung und Montage werden ebenfalls deutlich verringert.

Weitere Ausgestaltungen sind entsprechend den Unteransprüchen vorgesehen.

Einzelheiten, Merkmale und Vorteile der Erfindung ergeben sich aus der nachstehenden Erläuterung eines in der Zeichnung schematisch dargestellten Ausführungsbeispieles. Es zeigen:
- Figur 1: eine Ausführung der Kupplung nach dem Stand der Technik, im Schnitt einer die Mittellinien beider Trommeln schneidenden Ebene;
- Figur 2: den Gegenstand der Erfindung, ebenfalls im Schnitt einer die beiden Trommel-Mittellinien schneidenden Ebene.

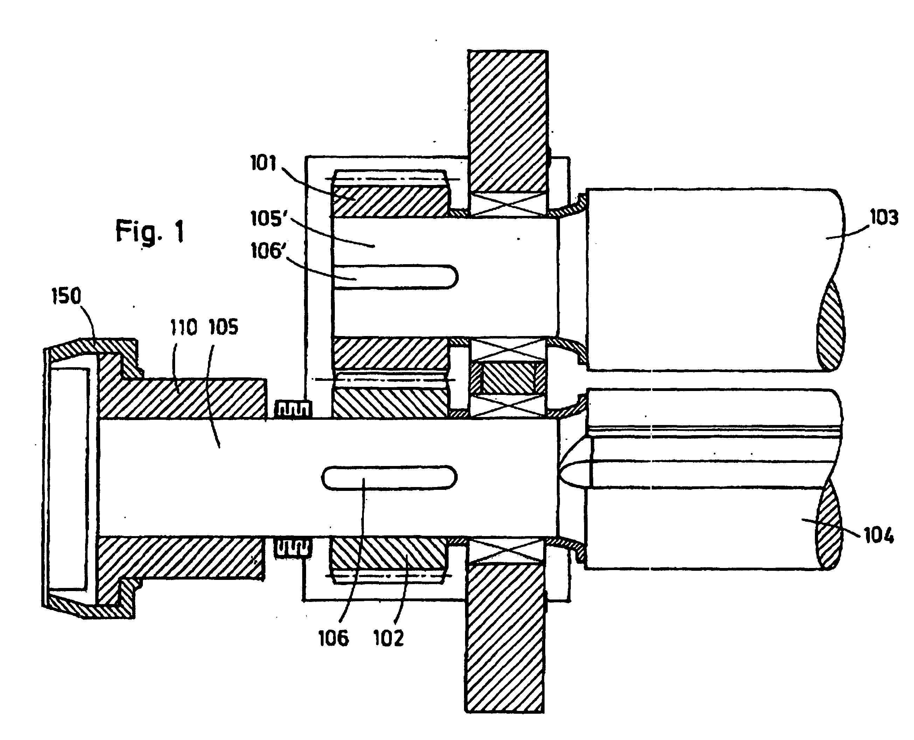

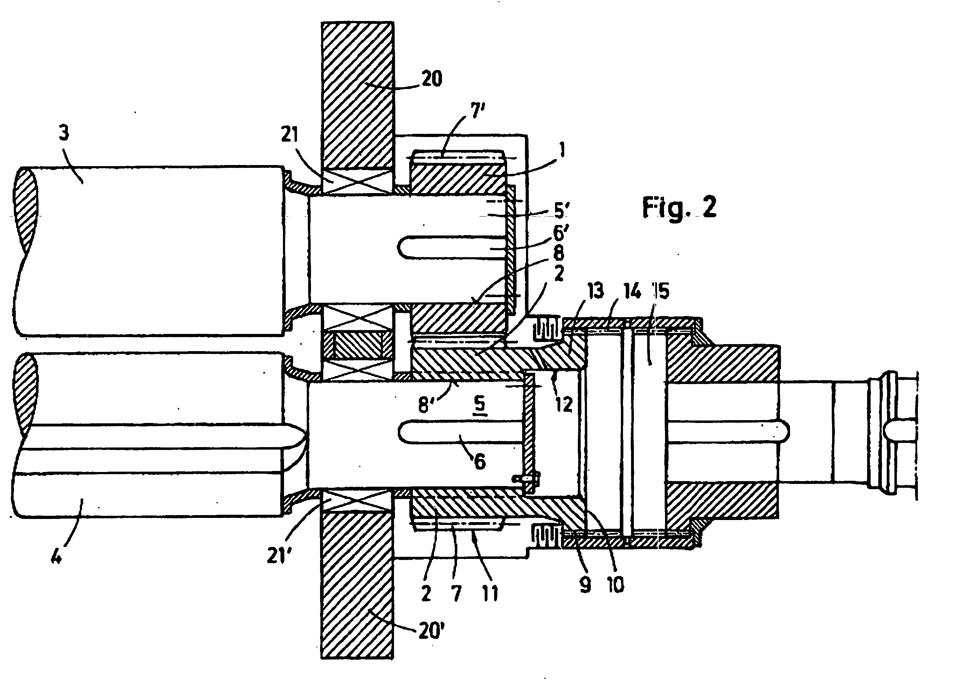

Um eine bessere Übersicht beim Vergleich der beiden Ausführungen nach Fig. 1 und Fig. 2 zu erreichen, sind Elemente gleicher Funktion mit Bezugszeichen gleicher Endziffer gekennzeichnet.

Fig. 1 zeigt nach dem Stand der Technik eine Antriebskupplung für Trommelscheren, bei welchen die untere Trommel 104 als Antriebstrommel ausgebildet ist, die über die zusammenwirkenden Synchronzahnräder 101, 102 (entsprechend in Fig. 2 dem Zahnradpaar 1 bzw. 2) ein Drehmoment vom Wellenzapfen 105 über das darauf undrehbar befestigte Zahnrad 102 auf das Zahnrad 101 überträgt, welches mit dem Wellenzapfen 105' verbunden ist.

Das hat zur Folge, daß der Wellenzapfen 105 die Drehmomente der beiden Trommeln 103, 104 zusammen übernehmen muß und demzufolge in seinem Querschnitt entsprechend belastet wird, was insbesondere dann kritisch sein kann, wenn die Schere aufgrund ihrer Funktion mit stoßartigen Drehmomentspitzen belastet wird. Das hierbei verursachte Auf- und Abschwellen der Drehmomente kann auf die Dauer zu einer Materialermüdung mit Bruchgefahr führen.

Diese Gefahr wird bei der erfindungsgemäßen Ausgestaltung der Antriebskupplung nach Fig. 2 vollständig vermieden. Hier übernimmt das Kraftübertragungselement 10 unter Entlastung des Wellenzapfens 5 das vollständige Drehmoment aus der Kupplung 15 durch die zusammenwirkende Innenverzahnung der Kupplungshülse mit der äußeren Gegenverzahnung 9 des außenverzahnten Flansches 13. Der Wellenzapfen 5 übernimmt also nur noch das Drehmoment der Messertrommel 4, und der Wellenzapfen 5' der Messertrommel 3 übernimmt ebenfalls nur den Kraftbedarf der Messertrommel 3. Es findet also eine optimale Drehmomentaufteilung statt, welche eine Überlastung der antriebsseitigen Bauteile der Kupplung bzw. des mit ihr verbundenen Wellenzapfens 5 vermindert bzw. verhindert.

Zugleich ergibt sich, wie aus der vergleichenden Darstellung der Fig. 1 und 2 ersichtlich ist, eine Reduzierung der Breitenabmessung der Schere gemäß Fig. 2 quer zur Walzrichtung, wodurch eine Einplanung in bestehende Anlagen fallweise erheblich erleichtert wird. Die üblicherweise lange angetriebene Trommel, die untere in Fig. 1 und 2, wird erheblich kürzer.

Aus der Fig. 2 ist weiter erkennbar, daß die Kupplung ein Kraftübertragungselement 10 in Form eines hülsenförmigen Doppelverzahnungsteils besitzt, dessen eines Ende 11 mit Paßsitz auf dem Wellenzapfen 5 der Messertrommel 4 mit Verdrehsicherung durch einen Wellenlängskeil 6 aufgeschoben ist, und mit einer Außenverzahnung 7 als Antriebszahnrad 2 des Synchrongetriebes 1, 2 ausgebildet ist. Dessen anderes Ende 12 besitzt einen außenverzahnten Flansch 13 zum drehschlüssigen Eingriff in die mit Innenverzahnung 14 kompatibel ausgebildete, antriebsseitige Kupplungshülse 15.

Das Kraftübertragungselement 10 bzw. Doppelverzahnungsteil ist einstückig ausgebildet, wie dies die Fig. 2 deutlich zeigt.

Es kann aber auch andererseits von der Maßnahme Gebrauch gemacht sein, daß das Kraftübertragungselement 10 bzw. Doppelverzahnungsteil zweiteilig in einer Trennebene quer zur Längsachse mit einer Flansch-Schraubverbindung ausgebildet ist (nicht gezeigt).

Die Zahnräder 1, 2 des Synchrongetriebes sind mit ihren Bohrungen 8, 8' auf den Wellenzapfen 5, 5' der Messertrommeln 3, 4 befestigt und durch Wellen-Längskeile 6, 6' gegen Verdrehung gesichert.

Weiterhin ist vorgesehen, daß die Wellenzapfen 5, 5' mit Zylinderrollenlagern 21, 21' in seitlichen Wangen 20, 20' des Scherengerüstes gelagert sind.

Die Erfindung ist überraschend unkompliziert und von besonderer Wirksamkeit durch annähernd gleichmäßige Aufteilung des Antriebsdrehmomentes über das Synchrongetriebe 7, 7' der Zahnräder 1,2 auf die beiden Trommelzapfen 5, 5'.

## Patentansprüche

1. Antriebskupplung für Trommelscheren zum Quertrennen eines laufenden Bandes insbesondere eines gewalzten Warmbandes, umfassend ein Paar in einem Scherengerüst gelagerte, durch ein Zahnradpaar (1, 2) in gegenläufig-synchrone Rotation antreibbare Messertrommeln (3, 4) sowie ein zugeordnetes Antriebsaggregat,
**dadurch gekennzeichnet,**
**daß** die Kupplung ein Kraftübertragungselement (10) in Form eines hülsenförmigen Doppelverzahnungsteils besitzt, dessen eines Ende (11) mit Paßsitz auf dem Wellenzapfen (5) einer der Messertrommeln (4) mit Verdrehsicherung aufgeschoben ist, und mit einer Außenverzahnung (7) als Antriebszahnrad (2) des Synchrongetriebes (1, 2) ausgebildet ist, und dessen anderes Ende (12) einen außenverzahnten Flansch (13) zum drehschlüssigen Eingriff in eine mit Innenverzahnung (14) kompatibel ausgebildete, antriebsseitige Kupplungshülse (15) besitzt.

2. Antriebskupplung nach Anspruch 1,
**dadurch gekennzeichnet,**
**daß** das Kraftübertragungselement (10) bzw. Doppelverzahnungsteil einstückig ausgebildet ist.

3. Antriebskupplung nach Anspruch 1,
**dadurch gekennzeichnet,**
**daß** das Kraftübertragungselement (10) bzw. Doppelverzahnungsteil zweiteilig in einer Trennebene quer zur Längsachse mit einer Flansch-Schraubverbindung ausgebildet ist.

4. Antriebskupplung nach einem oder mehreren der Ansprüche 1 bis 3,
**dadurch gekennzeichnet,**
**daß** die Zahnräder (1, 2) des Synchrongetriebes mit ihren Bohrungen (8, 8') auf den Wellenzapfen (5, 5') der Messertrommeln (3, 4) befestigt und durch Wellen-Längskeile (6, 6') gegen Verdrehung gesichert sind.

5. Antriebskupplung nach einem oder mehreren der Ansprüche 1 bis 4,
**dadurch gekennzeichnet,**
**daß** die Wellenzapfen (5, 5') mit Zylinderrollenlagern (21, 21') in seitlichen Wangen (20, 20') des Scherengerüstes gelagert sind.

## Claims

1. A drive coupling for drum-type shears that serve for transversely severing a moving strip, particularly a hot-rolled strip, with a pair of cutting drums (3, 4) that are supported in a shear stand and can be synchronously driven in opposite rotating directions by means of a gear wheel pair (1, 2), and with an assigned drive unit,
**characterized in**
**that** the coupling comprises a power transmission element (10) in the form of a sleeve-shaped part with a double gearing, one end (11) of which is snugly fitted onto the shaft journal (5) of one cutting drum (4) such that it is prevented from turning relative thereto and realized with an external gearing (7) that serves as the driving gear (2) of the synchromesh gear (1, 2), and the other end (12) of which contains an externally geared flange (13) for rotationally engaging into a coupling sleeve (15) on the drive side that is realized with a compatible internal gearing (14).

2. The drive coupling according to Claim 1,
**characterized in**
**that** the power transmission element (10) or the part with a double gearing, respectively, consists of one piece.

3. The drive coupling according to Claim 1,
**characterized in**
**that** the power transmission element (10) or the part with a double gearing, respectively, is divided into two parts in a plane that extends transverse to the longitudinal axis and provided with a flange-screw connection.

4. The drive coupling according to at least one of Claims 1-3,
**characterized in**
**that** the gear wheels (1, 2) of the synchromesh gear are mounted on the shaft journals (5, 5') of the cutting drums (3, 4) with their bores (8, 8') and secured from turning relative thereto by means of longitudinal splines (6, 6').

5. The drive coupling according to at least one of Claims 1-4,
**characterized in**
**that** the shaft journals (5, 5') are supported in lateral bearers (20, 20') of the shear stand by means of cylindrical roller bearings (21, 21').

## Revendications

1. Embrayage pour cisaille volante pour la découpe transversale d'une bande continue, notamment d'une bande chaude laminée, comprenant une paire de rotors à couteaux (3, 4) s'appuyant dans une structure de cisaille et pouvant être entraînés par une paire de roues dentées (1, 2) en rotation synchrone inversée ainsi qu'un agrégat de commande associé,
**caractérisé en ce que**
l'embrayage possède un élément de transmission de force (10) sous forme d'une pièce à double denture en forme de manchon, dont une extrémité (11) est glissée avec un ajustement serré sur le tourillon d'arbre (5) d'un des rotors à couteaux (4) avec sécurité anti-torsion, et est réalisé avec une denture extérieure (7) faisant office de roue dentée motrice (2) de la commande synchrone (1, 2), et dont l'autre extrémité (12) possède une bride dentée à l'extérieur (13) destinée à être mise en engrènement par rotation dans un manchon d'accouplement (15) disposé du côté moteur et conçu de manière à être compatible avec la denture intérieure (14).

2. Embrayage selon la revendication 1,
**caractérisé en ce que**
l'élément de transmission de force (10) ou la pièce à double denture est réalisé en une pièce.

3. Embrayage selon la revendication 1,
**caractérisé en ce que**
l'élément de transmission de force (10) ou la pièce à double denture est réalisé en deux pièces dans un plan de découpe transversalement par rapport à l'axe longitudinal avec un raccordement vissé à bride.

4. Embrayage selon l'une quelconque ou plusieurs des revendications 1 à 3,
**caractérisé en ce que**
les roues dentées (1, 2) de la commande synchrone sont fixées par leurs alésages (8, 8') sur les tourillons d'arbres (5, 5') des rotors à couteaux (3, 4) et sont empêchées de tourner par des coins longitudinaux des arbres (6, 6').

5. Embrayage selon l'une quelconque ou plusieurs des revendications 1 à 4,
**caractérisé en ce que**
les tourillons d'arbres (5, 5') s'appuient par des paliers à roulements cylindriques (21, 21') dans des mors latéraux (20, 20') de la structure de cisaille.
